# EUROPEAN PATENT SPECIFICATION

(11) **EP 0 649 254 B1**
(45) Date of publication and mention of the grant of the patent: **17.03.1999**
(21) Application number: 94202922.4
(22) Date of filing: 10.10.1994
(51) Int. Cl.: H04N 5/92, H04N 7/26

(54) **Method of storing coded image information**
Verfahren zur Speicherung von kodierten Bilddaten
Méthode de stockage de données d'images codées

(30) Priority: 14.10.1993 BE 9301087; 15.11.1993 EP 93203173
(43) Date of publication of application: 19.04.1995
(73) Proprietor: Koninklijke Philips Electronics N.V., 5621 BA Eindhoven (NL)
(72) Inventor: Peters, Joseph Hubertus, NL-5656 AA Eindhoven (NL); van der Hijden, Petrus Cornelis Gerardus, NL-5656 AA Eindhoven (NL)
(74) Representative: Groenendaal, Antonius Wilhelmus Maria

(56) References cited:
- EP-A- 0 327 931
- EP-A- 0 367 264
- EP-A- 0 382 541
- EP-A- 0 382 550
- EP-A- 0 448 491
- WO-A-92/05504
- PROCEEDINGS OF THE TWELFTH ANNUAL INTERNATIONAL CONFERENCE OF THE IEEE ENIGINEERING IN MEDICINE AND BIOLOGY SOCIETY, November 1990, NEW YORK, US pages 152 - 153, XP239472 CHAMEROY ET AL. 'INTERFRAME COMPRESSION OF MEDICAL IMAGES'
- PROCEEDINGS OF THE TWELFTH ANNUAL INTERNATIONAL CONFERENCE OF THE IEEE ENIGINEERING IN MEDICINE AND BIOLOGY SOCIETY, November 1990, NEW YORK, US pages 226 - 227, XP239505 LEE ET AL. 'INTER-HOSPITAL TELE-RADIOLOGY VIA INTEGRATED SERVICE DIGITAL NETWORKS AND LOCAL AREA NETWORKS'
- PATENT ABSTRACTS OF JAPAN vol. 16, no. 211 (P-1355) 19 May 1992 & JP-A-04 083 564 (TOSHIBA) 7 February 1992
- COMMUNICATIONS OF THE ASSOCIATION FOR COMPUTING MACHINERY, vol.32, no.7, July 1989, NEW YORK US pages 852 - 860, XP45774 LIPPMAN ET AL. 'Coding image sequences for interactive retrieval'

## Description

The invention relates to a method of recording in coded form on a record carrier image information relating to moving images for the purpose of further analysis at a later instant, the image information representing moving images in the form of a series of images which succeed one another in time, said series of images being converted into a first data stream in which each of the series of succeeding images is represented, which first data stream is subsequently recorded on the record carrier, the series of images being converted into a second data stream, and the second data stream being recorded on the record carrier together with the first data stream.

The invention also relates to a diagnostic system using the method.

The invention further relates to an image coding and recording unit and an image information retrieval unit for use in such a system.
The storage of moving images on a record carrier for the purpose of subsequently examining this image information is known from the SMPTE Journal, Volume 102, No. 7, July 1993, pp. 612-615.

Such a method can be used, for example, in so-called cardiovascular diagnosis where the cardiac function is examined by introducing a contrast medium into a blood vessel of the heart and subsequently making a series of radiographs to record how this contrast medium propagates in the blood vessels of the heart as a function of time. The series of images obtained by means of the radiographs are converted into coded data streams which are subsequently recorded on a suitable record carrier, for example in the form of a magnetic or optical tape or disc. The image information thus recorded is read out and displayed at later instant to analyse the cardiac function. This is effected by examining moving images and if a further examination of individual images is required stationary images are displayed. For this purpose it is desirable that each of the individual images can be displayed selectively as a still image, enabling both preceding images and subsequent images to be selected. For a correct diagnosis it is desirable that the images recovered from the coded information read from the record carrier are of the same quality as the originally recorded images. This means that the amount of information to be read out per image is large and, consequently, the data rate (amount of information per unit of time) with which the information is read should be high. This high data rate (hereinafter also referred to as "read velocity") imposes stringent requirements on the read devices by means of which the image information is read.

A method of storing image information as described in the opening paragraph is disclosed in Communications of the Association for Computing Machinery, Vol. 32, No. 7, July 1989, New York US, pages 852-860. According to this method moving images are encoded at a relatively low resolution of 320 x 240 picture elements. Additionally, information of higher frequency bands of these images is stored. This allows for higher quality reconstruction or enhancement in still modes.

It is an object of the invention to provide a method by means of which, on the one hand, the image information is recorded in such a manner that a rapid and reliable analysis of the image information is possible and for which, on the other hand, the data rate with which the image information is read is limited.

This object is achieved by means of a method as described in the opening paragraph, characterised in that, each of the series of succeeding images is likewise represented in the second datastream, the average amount of information per image in the first data stream being smaller than in the second data stream.

The method in accordance with the invention advantageously utilises the fact that for other requirements are imposed on the reproduction of moving images than on the reproduction of still images. For example, for the reproduction of moving images it is essential that the rate at which the successive images are reproduced is high enough to achieve an impression of non-intermittent motion. In general, the image quality is considered to be less important for moving images than for still images. Conversely, the rate at which successive images can be reproduced is less important for the reproduction of still images. With a given limited read velocity of a read device the recording of the two data streams has enabled the moving images to be coded by a coding method which to an optimum extent meets the requirements imposed on the reproduction of moving images, the recording of the second data stream yet enabling each individual image to be reproduced with a high quality. The fact that the time required to read out the information relating to the still image to be displayed is longer than the time between successive images during the reproduction of moving images does not pose a problem provided that it remains within acceptable limits.

It is to be noted that JP-A-1-243184 discloses a device for displaying image information. Moving image information in the form of a series of time sequential images are stored in irreversibly compressed form in a RAM. In addition, for some of the images of a series of successive images representing the moving pictures a reversibly compressed image is stored in the RAM. For the reproduction of moving images the irreversibly compressed images are read out, expanded and subsequently applied to an display device. For the reproduction of a still image a reversibly compressed image is read out, expanded and applied to the display device. With the disclosed device a reversibly compressed image is available only for a very limited number of images of the series of successive images representing the moving pictures and therefore the device is not suitable for the thorough analysis of image information as required, for example, in cardiac function analysis. Indeed, for this analysis a high-quality still image is required for each of the images of the series of images forming the moving images.

An embodiment of the method is characterised in that reference information is recorded on the record carrier, which reference information is indicative of the locations where corresponding images are situated in the first and the second data stream.

This embodiment has the advantage that during the analysis which follows an interruption in the reproduction of the moving image the associated high-quality coded image in the second data stream can be located rapidly on the basis of the reference information.

An embodiment of the method is characterised in that the conversion of the series of images in the first data stream is of a type in which images of the series are coded by coding differences between the relevant image and another image of the series, each image in the second data stream being represented by a separately coded image which has been coded independently of the image information of other images of the series.

This embodiment has the advantage that as result of the redundance in the successive images a high degree of compression and, consequently, a low required read velocity can be obtained while preserving a satisfactory image quality. In this case the disadvantage of such compression techniques that arbitrary images cannot simply be retrieved does not play a part owing to the availability of the second data stream. Another disadvantage that the reproduced images based on the first data stream exhibit distortion, *i.e.* quantisation noise, is also of minor importance because such imperfections are considered to be less annoying in the case of moving images and because any individual image can be reproduced without distortion owing to the presence of the second data stream.
A particularly suitable image coding for obtaining the first data stream is the so-called MPEG coding.

A further embodiment of the method is characterised in that the series of images is also converted into a third data stream in which each image of the series is represented, the average amount of information per image in the third data stream being smaller than in the first data stream.

The record carrier obtained by means of this embodiment enables moving images to be reproduced smoothly by means comparatively simple and, consequently, cheap read devices which read the third data stream with a low read velocity. The quality of the images reproduced on the basis of the third data stream is of a lower grade than that of images based the first and the second data stream but often the interpretation of the images does not require image reproduction with the highest quality. In many cases it is adequate to reproduce images with a lower quality. For example, when the cardiac function is discussed with another physician it is often adequate to display the image information with a lower resolution.

Since the resulting record carrier permits of high quality reproduction by means of advanced read devices and lower quality reproduction by means of cheaper read devices the use of sophisticated expensive read equipment can be restricted to those cases requiring the high image quality.

Moreover, it is to be noted that the record carrier area occupied by the lower quality image information is small in comparison with the area needed for the storage of the high quality images, so that the total amount of image information which can be recorded on a record carrier is reduced only slightly as result of the storage of the lower quality images.

A further embodiment of the method is characterised in that the series of images is also converted into a fourth data stream, each image being separately coded independently of the image content of the other images of the series, the average amount of information per image in the fourth data stream being smaller than in the second data stream, and the fourth data stream being recorded on the record carrier together with the first, the second and the third data stream.

This enables both moving images and still images to be reproduced by means of less expensive read equipment in a similar way as by means of sophisticated read equipment.

It is particularly attractive to code and record the lower quality moving images and the associated still images in accordance with a format which complies with the so-called CD-I standard. This enables the lower quality images to be reproduced by means of a cheap mass product developed for the consumer market.

In addition to the audiovisual information a CD-I should contain an application program which controls the access to the stored information during the read process. By adapting this application program so as to prevent the CD-I player from reading information not coded in accordance with the CD-I standard the recording of the higher quality images on a CD-I will have no consequences for the read-out of the CD-I disc by a CD-I player.

The read device for reading the higher resolution image information may be provided with a control system which enables the files with higher resolution image information to be read.

During an examination of the cardiac function the image information is generally obtained in a number of so-called runs. The length of a run is determined by the time required by the contrast medium to propagate in the blood vessels of the heart. This time is of the order of magnitude of ten seconds.

An embodiment of the method which is particularly suitable for use in the above-mentioned conditions is characterised in that at least the first and the second data stream, which have been derived from a continuous series of images, are recorded in a continuous part of the record carrier.
Since with this embodiment the information relating to the moving images as well as the information relating to the still images for one run are recorded together the search time upon a change from moving image reproduction to still image reproduction (or *vice versa*) is short.

A further embodiment is characterised in that for each continuous series of images a first part of the second data stream is recorded in such a way that it directly precedes the first data stream and a second part of the second data stream is recorded in such a way that it directly follows the first data stream.

This embodiment has the advantage that if it is desired to read a still image during the read-out of moving images the distance to the new the read location will only be minimal, which results in a short access time.

The method in accordance with the invention can be used advantageously in a system comprising
- means for acquiring image information relating to an object to be examined, which image information relates to moving images and comprises a series of images which succeed one another in time,
- an image coding and recording unit comprising first coding means for converting the series of images which succeed one another in time into a first data stream, and second coding means for converting the image information into a second data stream, and the image coding and recording unit further comprising a recording device for recording the first and the second data stream on one and the same record carrier,
- an image information retrieval unit of a first type comprising read means for reading the record carrier with a first read velocity, first and second decoding means for recovering successive images from the first and the second data stream, and image output means for supplying recovered images to an image reproducing device, characterised in that,
each image of the series of images is represented both in the first data stream and in the second data stream, and in that the average amount of information per image in the first data stream is smaller than in the second data stream, wherein the first decoding means serve for recovering successive images from the first data stream, and the second decoding means serve for recovering individual images from the second data stream, the system being a diagnostic system which further comprises control means for controlling the read means, the first and the second decoding means and the image output means, which control means are adapted to achieve that in a first mode a part of the recorded first data stream is read, a series of images corresponding to the read-out part is recovered by the first decoding means and said recovered images are supplied by the image output means, and the control means are further adapted to achieve that in a second mode a selected separately coded image of the second data stream is read, an image corresponding thereto is recovered from said coded image by the second decoding means and said recovered image is supplied by the image output means.

The invention will now be described in more detail with reference to Figures 1 to 6, in which
Figure 1 shows an embodiment of a diagnostic system in accordance with the invention,
Figures 2, 3 and 4 shows suitable layouts of the record carrier on which the data streams have been recorded,
Figure 5 shows an example of a decoding unit, and
Figure 6 is a flow chart of a program which can be carried out by a control unit in the diagnostic system in accordance with the invention.

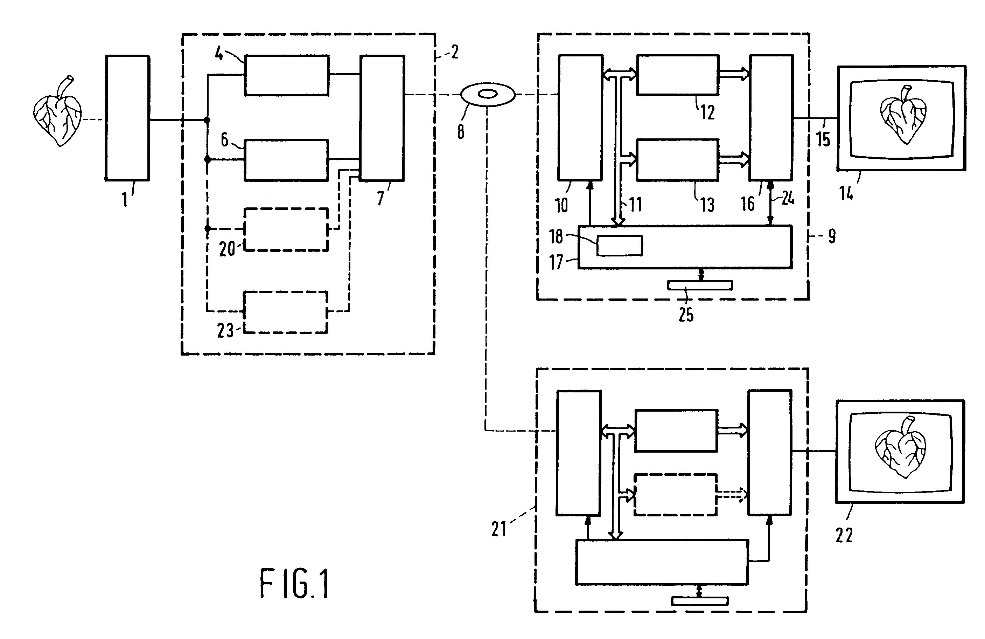

Figure 1 shows an embodiment of a diagnostic system in accordance with the invention. In the present embodiment the reference numeral 1 denotes customary means for acquiring moving-image information relating to an object 3 to be examined. Such means, referred to hereinafter as an image acquisition unit, may comprise customary X-ray imaging equipment for making a series of X-ray exposures of the vascular system of a human or animal heart into which a contrast medium has been introduced, which exposures succeed one another at fixed time intervals of, for example 40 ms. Such X-ray imaging equipment may include a TV camera for picking up an image formed on an X-ray image intensifier. The X-ray imaging equipment may also include a pick-up device for the direct electronic conversion and storage of the X-ray image. However, other image acquisition units for picking up moving images other than X-ray images are also possible. Image signals representing the acquired series of images are applied to an image coding and recording unit 2.

If the image acquisition unit 1 picks up X-ray images the image signals may comprise digital signals representing monochrome pictures formed by a matrix of pixels, for example 512x512 pixels, the image signal for each pixel comprising a luminance value indicating the intensity level of the relevant pixel.

The image coding and recording unit 2 comprises a first coding unit 4 for converting the series of images represented by the image signals into a first data stream comprising a representation of each image of the series. The coding unit 4 is of a customary type adapted to compress moving images. An important requirement imposed on such compression techniques is a low average quantity of information per image. This is in order to minimise the amount of information to be transmitted per unit of time and, consequently, the required transmission bandwidth. For the reproduction of moving images the image quality of the individual images is less important because faults in the individual images during the reproduction of moving images are less conspicuous in comparison with faults in a reproduced still image. As a result of this lower image quality the data stream obtained by means of a compression technique which has been optimised for the transmission of moving images is therefore not suitable for the recovery of a high-quality still image. Yet, to enable a high-quality still image to be reproduced, a second data stream is recorded on the record carrier, from which a high-quality still image can be recovered for each image of the series. To derive this second data stream the image coding and recording unit 2 comprises a second coding unit 6 for converting the series represented by the image signals into the second data stream. The coding unit 6 is of a customary type optimised for encoding still images. An important requirement to be met in this respect is that the image quality of the image which can be recovered on the basis of the coded image is high. The amount of information per coded image is less important because the transmission rate with which the coded image is to be transmitted need not meet any special requirements.

Attractive coding techniques for coding (compressing) moving-image information are techniques which utilise the redundancy between successive images. A suitable image compression technique is the so-called MPEG image compression, which has been described comprehensively *inter alia* by D.J. Le Gall in "The MPEG video compression algorithm"; Signal Processing: Image Communication 4(1992); pp. 129-140; Elsevier Science Publishers B.V. and "MPEG: A video compression standard for multimedia applications"; Communications of the ACM; April 1991, Vol. 34 no. 4, pp. 47-58, said publications being herewith incorporated by reference. Since the redundance between successive images is high in compression techniques utilising redundancy a substantial compression factor is attained. As a result of this large compression factor these compression techniques are particularly suitable for recording and reading moving images on/from a record carrier. This makes it possible, in spite of a comparatively low read velocity customary for reading, to read digitised moving-image information rapidly enough to allow a smooth reproduction of the moving-image information to be obtained.

A disadvantage of this compression technique is that for the recovery of an arbitrarily selected image information about a number of different images is required.

This is a disadvantage particularly if it is necessary to read out an arbitrarily selected image for the reproduction of a still image.

A suitable compression technique for the compression of stationary-image information is the MPEG coding technique used for coding so-called "MPEG-INTRA" images. Another suitable compression technique is the so-called "JPEG" coding. Still another suitable coding technique, which is use*d inter alia* in the so-called Photo-CD system, is described in WO 91/08648 and WO 92/05651, which documents are herewith incorporated by reference. The afore-mentioned compression techniques have lower compression factors that compression techniques which allow for the redundancy between successive images, so that the amount of information per coded image for compression techniques which do not allow for the redundancy between successive images is larger than in the case of compression techniques which allow for this. This means that when an image recorded on a record carrier is read out the time required for reading is comparatively long. However, the image quality is considerably better.

In order to record the data streams the image coding and recording unit 2 further comprises a recording device 7 for recording the first and the second data stream on one and the same record carrier 8. The record carrier may be, for example, of an optical, magnetic or magneto-optical type. Record carriers of an optical or magneto-optical type are preferred owing to their high storage capacity. Although in principle a record carrier in the form of a tape may be used a disc-shaped record carrier is to be preferred because of the inherently short access times in so-called "random access" modes. The recording unit 2 may be of a customary type, for example as described in EP-A-0,507,403 (PHN 13.685), which records the data streams on the record carrier in accordance with a customary recording principle and which further comprises the necessary control means for dividing the information streams among files and for adding control files with index data to control the read-out of the various data files. A suitable arrangement of the information in the files will be described in a subsequent part of the description. The recording device further comprises the necessary formatting means for suitably formatting the files. A suitable format is *inter alia* the format as used for record carriers of the CD-ROM type as defined in the ISO 9660 standard. However, it will be obvious to those skilled in the art that numerous other formats are suitable. The embodiment of the image coding and recording unit 2 uses two separate coding units. It will also be obvious to the expert that instead of two separate coding units it is possible to use one coding unit capable of performing the two required codings. The two coding units can be combined simply, for example, in the case that for the compression of moving-image information the MPEG technique is used and for the coding of the stationary images the MPEG coding for so-called "INTRA" images is used.

By means of the image coding and recording unit 2 two data streams are recorded on the record carrier 8, *i.e*. a (first) data stream enabling moving-image information being read to be reproduced steadily and a (second) data stream enabling a still image to be reproduced with a high image quality.

For the read-out and recovery of the image information on the record carrier 8 the diagnostic system comprises an image information retrieval unit 9. The image information retrieval unit 9 comprises a read unit 10 of a customary type, for example as described in the afore-mentioned EP-A-0,507,403, for reading the record carrier with a read velocity for which the bit rate at which the bits of the information stream become available is high enough to ensure a steady reproduction of moving-image information. To apply the first data stream being read and the second data stream being read to a first decoding unit 12 and a second decoding unit 13, respectively, a bus 11 couples the read unit 10 to said first decoding unit 12 and said second decoding unit 13. The decoding unit 12 is of a customary type for recovering the moving-image information from the first data stream in a manner which is the inverse of the coding carried out by the coding unit 4 for moving-image information. The second decoding unit 13 is of a customary type for recovering still-image information from the second data stream in a manner which is the inverse of the coding applied by the coding unit 6. The present embodiment uses two separate decoding units 12 and 13. It will be obvious to the expert that instead of two separate decoding units it is possible to use one decoding unit capable of performing the two required codings, in which case parts of the decoding unit can be used for both decoding operations.

The image information retrieval unit 9 further comprises an image output unit 16 of a customary type adapted to convert the retrieved images into an output image signal, for example a video signal of a customary type suitable for an image reproducing unit 14, for example an image display unit such as a monitor or a television set. The image output unit may comprise, for example, a so-called frame buffer store adapted to store the associated signal values for each pixel of the image to be displayed. Depending on a logic value of a selection signal applied *via* a signal line 24 the frame buffer store is loaded with the signal values of the pixels of the image information recovered by the decoding unit 12 or with the signal values of the pixels of the image information recovered by the decoding unit 13. The signal values stored in the frame buffer store are read out in a given sequence and converted into the video signal. The output image signal is applied to the image display unit 14 *via* a signal line 15. For the purpose of controlling the read-out, decoding and supplying the output image signal the image information retrieval unit 9 comprises a control unit 17, which for this purpose is coupled to the read unit 10, the first decoding unit 12, the second decoding unit 13 and the image output unit 16.

The control unit 17 in the present device is of a program-controlled type having a program memory 18 loaded with a suitable program. However, it will be obvious to those skilled in the art that it is likewise possible to use a so-called "hard-wired" circuit in which the control program is defined by the manner in which the various parts of the circuit are interconnected. The control unit 17 can operate in a first mode and in a second mode.

In the first mode a selected part of the recorded first data stream is read, the moving-image information is recovered and the recovered moving-image information is supplied under customary program control.

In a second mode a selected coded image of the second data stream is read, the corresponding still-image information is recovered and the recovered still-image information is supplied under customary program control.

The control unit can be set at option to the first or the second mode in a customary manner *via* an operating unit 25.

The image information recorded on the record carrier 8 can be displayed on the image display unit 14 for analysis. The user can then set the control unit 17 to the first mode *via* the operating unit 25 to display moving images of the object to be analysed on the image display unit 14. If the user wishes to examine a certain fragment of the displayed series of moving images more closely he can set the control unit 17 to the second mode *via* the operating unit 25, which for this purpose supplies a "still image" signal to the control unit. Subsequently, the user can select an image of the second data stream which corresponds to the desired fragment in order to display it as a still picture.

It is preferred to take steps in order to facilitate the retrieval from the second data stream of the still image which corresponds to the desired fragment of the moving image. One possibility is to display image numbers together with the moving images on the image display unit 14 during the reproduction of moving images. When the reproduction of moving images is interrupted the display of the image number of the last image recovered from the first data stream may be continued. With the aid of this image number the user can then select the image to be displayed in the second mode as a stationary image.

However, it is preferred to construct the image coding and recording unit in such a manner that it records reference information on the record carrier to indicate for each of the parts where this image has been recorded in the first and the second data stream.

It is then advantageous to add a number of steps to the program in the program memory 18, *viz.*:
- a program step to interrupt the output of successive images recovered from the first data stream, preferably by interruption of the read-out of the first data stream;
- a program step to start the search for the reference information;
- a program step to determine on the basis of the reference information the part in the second data stream where a coded image is situated which corresponds to the image supplied by the image output unit at the time of interruption of the output of images recovered from the first data stream;
- a program step to start the read-out of the specified part of the second data stream;
- a program step to cause the supply of an image signal in which the represented image corresponds to the specified read-out part of the second data stream.

For a reliable analysis it is desirable that the image quality of stationary images recovered from the second data stream is substantially equal to the image quality of the images acquired by means of the image acquisition unit 1. This means that for an image acquired by the image acquisition unit 1 and consisting of a matrix of MxN pixels any pixel of the matrix can be recovered from the coded image without or substantially without faults.

After the user has analysed the displayed still images he can return, *via* the operating unit 25, to the first mode in which moving images are supplied. For this purpose the operating unit 25 supplies a "moving-image" signal to the control unit 17, which is then set to the second mode in response to the "moving-image" signal.

For the image quality of the moving-image information represented by the first data stream it is important that during steady reproduction it does not differ perceptibly from the moving-image information represented by the image signals supplied by the image acquisition unit 1.

The last-mentioned requirement defines the required data rate with which the first data stream is to be read. Although the attainable compression factor is large the required data rate will be high in comparison with the data rate of the most customary read devices, which means that the read unit 10 in the image information retrieval unit 9 is comparatively expensive.

Since in a large number of situations a satisfactory analysis is possible with a lower image quality it has advantages to record a third data stream in addition to the first and the second data stream, which third data stream represents the moving-image information with a lower quality than the first data stream and in which the amount of information per image is consequently smaller than in the first data stream, which means that for reading this third data stream a lower data rate (read velocity) is adequate. The third data stream can be read by read units which are cheaper than the read units for the first data stream.

To encode the third data stream the image coding and recording unit may be extended with a third coding unit 20 of a type which corresponds to the coding unit 4 but which provides a higher compression factor.

It is also advantageous to record, in addition to the third data stream, a fourth data stream representing still-image information on the record carrier 8. In this fourth data stream the individual images of the series supplied by the image acquisition unit 1 can be represented in the same way as in the second data stream but with a lower image quality. The fourth data stream can be obtained by means of a coding unit which codes the images received from the image acquisition unit 1 in the same way as the coding unit 6 but which provides a higher compression factor.
The third and the fourth data stream can be read, recovered and supplied to an image display unit 22 by means of an image information retrieval unit 21. The image information retrieval unit 21 may be similar to the image information retrieval unit 9, the difference being that the bit rate (read velocity) with which the data streams are read is lower and that the decoding units used in the unit 21 perform a decoding which is the inverse of the coding applied by the coding units 20 and 23.
The diagnostic system shown in Figure 1 comprises only one image information retrieval unit (9) with a high bit rate and only one image information retrieval unit (21) with a low bit rate. In practice, the number of image information retrieval units used in conjunction with the image coding and recording unit 2 will often be substantially larger, particularly for medical uses where diagnosis and information transfer are effected by means of the image information retrieval units. Moreover, with such uses recording and reproduction may be effected at locations and instants which differ considerably.
By the use of two different types of image information retrieval units, one with a high bit rate in order to obtain an optimally high image quality and one with a low bit rate in order to obtain images of slightly lower quality, it is possible to use the image information retrieval units having high bit rates only in those cases in which an image of optimum image quality is necessary. In the other cases the use of an image information retrieval unit having a lower bit rate is adequate.

It is to be noted that in principle the decoding unit for recovering the image information from the fourth data stream may be omitted in the image information retrieval unit 21.
A so-called CD-I player adapted to reproduce so-called "Full Motion Video" is very suitable for use as an image information retrieval unit 21. For further information about such a player reference is made to "IEEE Transactions on Consumer Electronics, Vol. 38, no. 4, November 1992, pp. 910 to 920, herewith incorporated by reference. If a CD-I player is used in the diagnostic system it is desirable that the image coding and recording unit is loaded with a so-called application program, which is fetched and subsequently recorded in a so-called CD-I file on the record carrier by the recording unit. When the record carrier 8 is read by the CD-I player this application program is read into a program memory of the player. The read-out of the image information by the CD-I player is then controlled by the application program loaded into the program memory. Preferably, the application program is such that access to the files relating to the first and second data streams is not possible under control of the application program.

Figure 2 shows a suitable layout of a track 30 of the record carrier 8 with information files in which the data streams are stored. The recorded information is divided into data blocks (not shown) with an address indicating the location of the data block in the track. In the present layout the positions of the files are shown as a function BLCKAD, which represents an address value of the block address.

The first, the second, the third and the fourth data stream are stored in respective image information files DS1, DS2, DS3 and DS4. The track further includes a first directory file DF1 containing references to the starting addresses of moving-image information files containing the first and second data streams. In the present example these are the image information files DS1 and DS2 but it will be evident that the number of image information files containing the first and the second data stream can be larger than illustrated in Figure 2.

The track further includes a second directory file DF2 containing references to the starting addresses of the image information files containing the third and the fourth data stream. In the present example these are the image information files DS3 and DS4.

As a result of the use of a separate directory file containing references to the starting addresses of the image information files containing the first and the second data stream and a separate directory file containing references to the starting addresses of the image information files containing the third and the fourth data stream simply it is simple to prevent control programs in the image information retrieval unit from accessing data streams for which no decoding unit is available. In other words, the control programs in the image information retrieval unit 9 should only have access to image files referred to in the directory file DF1. The control programs in the image information retrieval unit 21 should all have access to image files referred to in the directory file DF2.

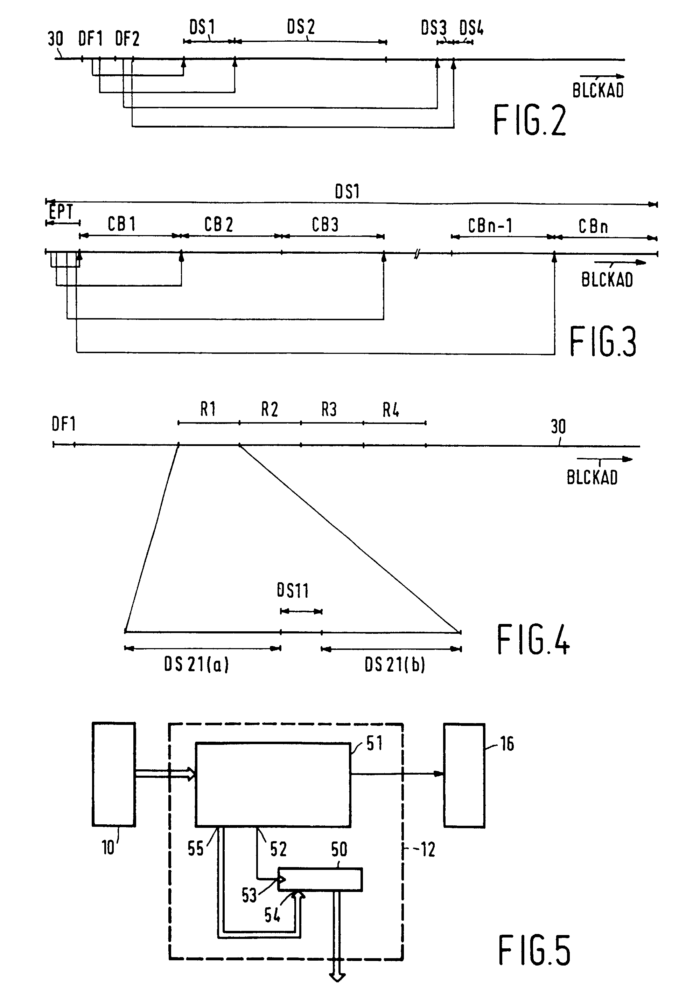

Figure 3 shows a suitable layout for image files DS1.

It is to be noted that the layout shown in Figure 3 is suitable for all subfiles in which a first, a second, a third or a fourth data stream has been recorded.

The shown image file DS1 contains a coded image, CB1, CB2, CB3, ..., CBn-1 and CBn, for each of the series of images represented by the data stream in the relevant image information file. Each coded image contains the coded information derived for each image by the coding unit which has generated the data stream containing the relevant image information file. An image number code specifying the position of the image within the series of successive images is assigned to a number of coded images, preferably those coded images from which a complete still image can be recovered without any further information from other coded images being required. In the case of MPEG coded images an image number code is assigned to each so-called "Intra" image. (From such an "Intra" image a complete image can be derived independently of the other coded images.) An MPEG coded signal may further comprise so-called "Predicted" images. A complete image can be recovered from the combination of a "Predicted" image and an associated "Intra" image. Finally, an MPEG coded image may include so-called "Bidirectional" images. A complete image can then be recovered from the combination of a "Bidirectional" image and the associated "Intra" image and "Predicted" image. The "Predicted" images and the "Bidirectional" images have not been provided with image number codes. The image information file DS1 includes a table EPT containing entry points for the coded images bearing an image number code. Herein, an entry point is to be understood to mean a reference code specifying the beginning of the associated coded image. This can be achieved by including the starting address of the relevant coded image in the entry-point table.

If the image file contains the second data stream and has an entry-point table (EPT) the reference information will include the image number codes in the coded images and the entry-point table in the image file containing the second data stream. When the supply of images recovered from the first data stream is interrupted the image number code of the last image supplied can now be determined in a program step of the program which has been loaded into the program memory.
To determine an image number of the supplied images corresponding to the "Predicted" images and, if applicable, the "Bidirectional" images the read device may be provided with an image counter. The count of the image counter is then incremented each time that a subsequent image is supplied. Each time that an image is supplied which has been recovered from a coded image having an image number code (the "Intra" image in the case of MPEG coded images) the image counter can be loaded with the image number defined by the image number code. The image counter is loaded at the beginning of the reproduction of a new series of images as soon as the first coded image having an image number code is recovered. Subsequently, the current image number can be updated by incrementing the count each time that an image is supplied. It is also possible to load the image counter with the image number corresponding to an image number code each time that a coded image having this image number code is recovered.

Figure 5 shows an example of the image decoding unit 12 provided with an image counter 50 of the type described above. The image decoding unit 12 further comprises an image decoding circuit 51, for example an MPEG decoding circuit 51. An output 52 of the decoding circuit 51 supplies a counting pulse to a count input 53 of the counter 50 each time that a decoded image is supplied to the image output unit 16. The content of the counter is incremented by a constant value in response to each counting pulse. A load input 54 of the image counter 50 is connected to an output 55 of the image decoding circuit 51 and supplies an image number corresponding to an "Intra" image to this output each time that a decoded image corresponding to this "Intra" image is supplied. The image counter is loaded with this image number when the image number is supplied to the output 55.

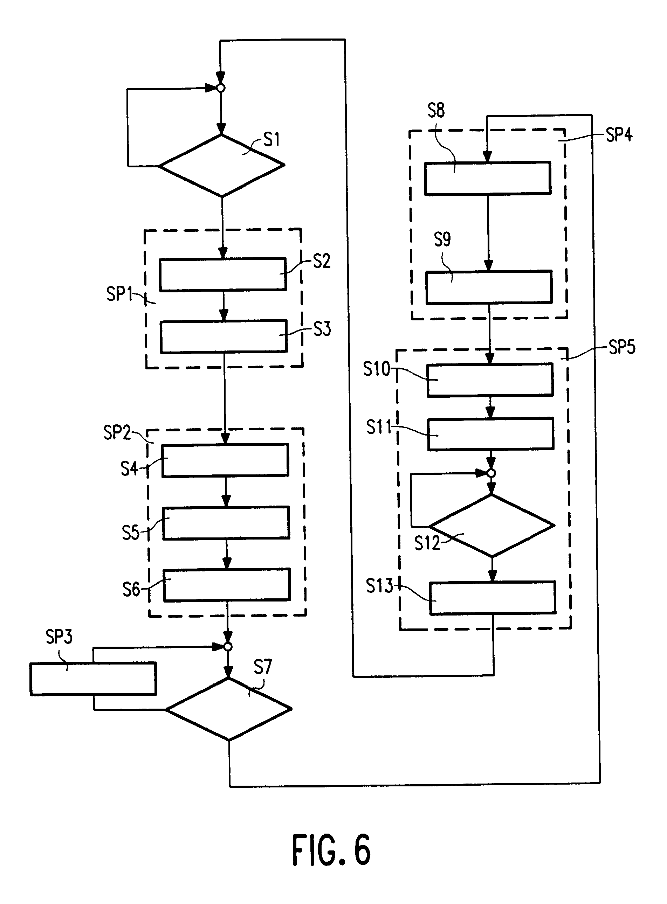

Figure 6 by way of example shows a flow chart of a program for effecting a change-over from the first mode to the second mode and *vice versa.* After the read-out of the first data stream from the record carrier has been started the program is in a test loop which comprises a test step S1 which ascertains whether the operating unit 25 supplies the "still image" signal to the control unit 17. This test step is repeated until the "still image" signal is detected. In that case the test step S1 is followed by a subprogram SP1. In the subprogram SP1 the first mode is terminated. The subprogram SP1 comprises a program step S2, in which reading of the first data stream from the record carrier 8 is stopped. After the step S2 has been carried out the image number of the currently supplied image is determined. The image number can be determined by reading out the image counter 54. The subprogram SP1 is followed by a subprogram SP2, in which the control unit 17 is set to the second mode. The subprogram SP2 begins with a step S4. In the step S4 the starting address of the coded image in the second data stream corresponding to the image number thus determined is derived by means of the entry-point table. Subsequently, during a step S5, this coded image in the second data stream is located and read out. After this, in a step S6, the image output unit 16 is set to a mode of operation in which the images recovered by the decoding unit 13 are converted into a corresponding video signal, which is supplied *via* the signal line 15. The step 16 is the last step of the subprogram SP2. After termination of the subprogram SP2 a test step S7 is carried out to test whether the operating unit 25 supplies the "moving image" signal to the control unit 17. If this is not the case, the step S7 is followed by a subprogram SP3 to check if a subsequent or preceding still image is to be supplied, and if this is the case the desired image is located and read from the record carrier. After completion of the subprogram SP3 the program proceeds with the step S7. The program loop formed by the step S7 and the subprogram SP3 is repeated until the "moving image" signal is detected in the step S7. After detection of the "moving image" signal the step S7 is followed by a subprogram SP4, in which the second mode is discontinued. This subprogram comprises a step S8, in which the image number of the last reproduced still image is determined. Subsequently, reading of the second data stream from the record carrier 8 is stopped in a step S9. The step S9 is the last step of the subprogram SP4. After termination of the subprogram SP4 a subprogram SP5 is carried out, in which the control unit 17 is reset to the first mode. The subprogram SP5 begins with a step S10, in which on the basis of the image number of the last reproduced still image and of the entry-point table EPT the image number is determined of that coded image in the first data stream which contains all the information necessary to recover a complete image and which directly precedes the image in the first data stream which corresponds to the last reproduced still image. Subsequently, during a step S11, the coded image in the first data stream with the image number thus determined is located and the read-out of the first data stream is started. In a subsequent test step S12 it is checked on the basis of the count of the image counter 54 whether the image corresponding to the last reproduced still image is already available on the output of the decoding unit 12. If it is available a step S13 is carried out, in which the image output unit 16 is set to a mode in which the images recovered by the decoding unit 12 are converted into a corresponding video signal, which is supplied *via* the signal line 15. The step S13 is the last step of the subprogram SP5. After termination of the subprogram SP5 the program proceeds with the step S1.

It is to be noted that upon interruption of the supply of images recovered from the third data stream a still picture corresponding to the image supplied immediately before the interruption can be retrieved from the fourth data stream in a manner similar to that described for retrieving a still image from the second data stream after interruption of the supply of images recovered from the first data stream.

The diagnostic system in accordance with the invention is particularly suitable for use in cardiac diagnosis. During such an examination a contrast medium is introduced into blood vessels of the heart, after which a series of radiographs of the heart is made. In cardiac diagnosis the image information is generally obtained in a number of so-called runs. The length of a run is determined by the time required by the contrast medium to propagate in the blood vessels of the heart. This time is of the order of magnitude of ten seconds. With a customary number of 15 to 30 X-ray exposures per second this means that one run consists of approximately 150-300 images. Before a subsequent run can be carried out it is necessary to wait until the contrast medium has disappeared from the blood vessels. This means that a comparatively long time expires between successive runs.

Figure 4 shows an attractive layout of the track 30 in the case that the images are available in runs.
The image information files generated in different runs are recorded in track portions R1, R2, R3 and R4. Each of the track portions contains an image information file for each of the data streams generated on the basis of the images obtained in the run. In the example shown in Figure 4 each of the track portions R1, R2, R3 and R4 includes two image information files, *i.e.* one image information file for the first data stream and one image information file for the second data stream. DS11 and DS21 are the image information files for the portion R1. The image information file DS11 contains the first data stream and the image information file DS21 contains the second data stream. The image information file DS21 comprises two subfiles (DS21a and DS21b). The track portion in which the image information file DS11 is recorded is the portion between the portions in which the subfiles DS21a and DS21b are recorded. The image information files in the other runs are recorded in a similar manner.
The image information file layout shown in Figure 4 has the advantage that if during the reproduction of moving-image information this reproduction is interrupted to read a still image to be recovered from the second data stream only a small distance has to be covered to move to the new read location, which results in a short access time.

## Claims

1. A method of recording in coded form on a record carrier image information relating to moving images for the purpose of further analysis at a later instant, the image information representing moving images in the form of a series of images which succeed one another in time, said series of images being converted into a first data stream in which each of the series of succeeding images is represented, which first data stream is subsequently recorded on the record carrier, the series of images being converted into a second data stream, and the second data stream being recorded on the record carrier together with the first data stream,
characterised in that,
each of the series of succeeding images is likewise represented in the second datastream and in that the average amount of information per image in the first data stream being smaller than in the second data stream.

2. A method as claimed in Claim 1, characterised in that reference information is recorded on the record carrier, which reference information is indicative of the locations where corresponding images are situated in the first and the second data stream.

3. A method as claimed in Claim 1, characterised in that the conversion of the series of images in the first data stream is of a type in which images of the series are coded by coding differences between the relevant image and another image of the series, each image in the second data stream being represented by a separately coded image which has been coded independently of the image information of other images of the series.

4. A method as claimed in Claim 1 or 3, characterised in that the series of images is also converted into a third data stream in which each image of the series is represented, the average amount of information per image in the third data stream being smaller than in the first data stream.

5. A method as claimed in Claim 4, characterised in that the series of images is also converted into a fourth data stream, each image being separately coded independently of the image content of the other images of the series, the average amount of information per image in the fourth data stream being smaller than in the second data stream, and the fourth data stream being recorded on the record carrier together with the first, the second and the third data stream.

6. A method as claimed in Claim 4 or 5, characterised in that further reference information is recorded on the record carrier, which further reference information for each image of the series indicates the parts in the third and/or the fourth data stream which are representative of the relevant image.

7. A method as claimed in Claim 4, 5 or 6, characterised in that on the record carrier an application program is recorded which, after being read, is intended to be loaded into a memory of a control unit of a read device in order to be subsequently used for controlling the read-out of the third and/or the fourth data stream, the application program being of a type which prevents the first and/or the second data stream recorded on the record carrier from being accessed during execution of the program.

8. A method as claimed in Claim 7, characterised in that the third data stream is obtained in accordance with an image coding defined in the CD-I standard, and the application program and the third data stream are recorded on the record carrier in a format complying with the CD-I standard.

9. A method as claimed in Claim 7 or 8, characterised in that the fourth data stream is obtained in accordance with an image coding defined in the CD-I standard, and the fourth data stream is recorded on the record carrier in a format complying with the CD-I standard.

10. A method as claimed in any one of the preceding Claims, characterised in that at least the first and the second data stream, which have been derived from a continuous series of images, are recorded in a continuous part of the record carrier.

11. A method as claimed in Claim 10, characterised in that for each continuous series of images a first part of the second data stream is recorded in such a way that it directly precedes the first data stream and a second part of the second data stream is recorded in such a way that it directly follows the first data stream.

12. A system comprising
- means for acquiring image information relating to an object to be examined, which image information relates to moving images and comprises a series of images which succeed one another in time,
- an image coding and recording unit comprising first coding means for converting the series of images which succeed one another in time into a first data stream, and second coding means for converting the image information into a second data stream, and the image coding and recording unit further comprising a recording device for recording the first and the second data stream on one and the same record carrier,
- an image information retrieval unit of a first type comprising read means for reading the record carrier with a first read velocity, first and second decoding means for recovering successive images from the first and the second data stream, and image output means for supplying recovered images to an image reproducing device, characterised in that,
each image of the series of images is represented both in the first data stream and in the second data stream, and in that the average amount of information per image in the first data stream is smaller than in the second data stream, wherein the first decoding means serve for recovering successive images from the first data stream, and the second decoding means serve for recovering individual images from the second data stream, the system being a diagnostic system which further comprises control means for controlling the read means, the first and the second decoding means and the image output means, which control means are adapted to achieve that in a first mode a part of the recorded first data stream is read, a series of images corresponding to the read-out part is recovered by the first decoding means and said recovered images are supplied by the image output means, and the control means are further adapted to achieve that in a second mode a selected separately coded image of the second data stream is read, an image corresponding thereto is recovered from said coded image by the second decoding means and said recovered image is supplied by the image output means.

13. A system as claimed in Claim 12, characterised in that the image information retrieval unit of the first type comprises means for stopping the first mode in response to a "still image" signal and means for starting the second mode, after termination of the first mode, regardless of whether the image which directly precedes the termination of the first mode has been recovered.

14. A system as claimed in Claim 12 or 13, characterised in that the image coding and recording unit is adapted to effectuate a recording of reference information on the record carrier, which reference information is indicative of the locations of corresponding images in the first and the second data stream.

15. A system as claimed in Claim 12 or 13, characterised in that the image information retrieval unit comprises means for interrupting the supply of succeeding images recovered from the first data stream, means for determining on the basis of the reference information the location in the second data stream where a separately coded image has been recorded, which image is dictated by the image supplied by the output means at the time of the interruption of the supply of images recovered from the first data stream, the control means for controlling the read-out being adapted to effectuate reading of the separately coded image at the location thus determined from the recorded second data stream at the location thus determined, and the recovery and the supply of the image corresponding to the image thus read.

16. A system as claimed in Claim 12, 13, 14 or 15, characterised in that the first coding means are of a type in which images of the series are coded by coding differences between the relevant image and another image of the series, the second coding means being adapted to separately code each image of the series independently of the image content of other images of the series.

17. A system as claimed in Claim 12 or 16, characterised in that the image coding and recording unit further comprises third coding means for converting the series of images into a third data stream in which each image of the series is represented, the average amount of information per image in the third data stream being smaller than in the first data stream, the recording means being adapted to record the third data stream together with the first and the second data stream, and the system further comprising an image information retrieval unit of a second type comprising second read means for reading the record carrier with a second read velocity, and means for recovering the images from the third data stream thus read, the first read velocity being higher than the second read velocity.

18. A system as claimed in Claim 17, characterised in that the image coding and recording unit further comprises fourth coding means for converting all the images of the series into a fourth data stream, each image of the series being coded independently of the image information in images of the remainder of the series, the average amount of information per image in the fourth data stream being smaller than in the second data stream, the recording means being adapted to record the fourth data stream together with the first, the second and the third data stream, and the image information retrieval unit being of the second type comprising means for recovering the images from the read-out fourth data stream.

19. A system as claimed in Claim 18, characterised in that the image coding and recording unit is adapted to effectuate a recording of further reference information on the record carrier, which further reference information is indicative of the locations of corresponding images in the first and the second data stream.

20. A system as claimed in Claim 17 or 18, characterised in that the image coding and recording unit comprises means for recording on the record carrier an application program intended to be loaded, after being read, into a control unit of a read device for the purpose of controlling the read-out of the third data stream, the image information retrieval unit being of the second type comprising read means for reading the application program and subsequently loading the application program into a control unit for controlling the read-out of the third data stream, the application program being of a type which prevents the first and/or the second data stream recorded on the record carrier from being accessed during execution of the program.

21. A system as claimed in Claim 17 or 18, characterised in that, in order to obtain the third data stream, the third coding means are adapted to code the images in accordance with an image coding defined in the CD-I standard, and the recording means are adapted to record the application program and the third data stream on the record carrier in a format complying with the CD-I standard, the image information retrieval unit of the second type being a CD-I player.

22. A system as claimed in Claim 21, characterised in that, in order to obtain the fourth data stream, the third coding means are adapted to code the images in accordance with an image coding defined in the CD-I standard, and the recording means are adapted to record the application program and the fourth data stream on the record carrier in a format complying with the CD-I standard.

23. A system as claimed in any one of the Claims 13 to 21, in which the means for acquiring image information relating to an object to be examined are adapted to supply a continuous series of succeeding images at intervals in which no image information is available, the recording means being adapted to record at least the first and the second data stream, which have been derived from a continuous series of images, in a continuous part of the record carrier.

24. A system as claimed in Claim 18, characterised in that the recording means are adapted to record a first part of the second data stream in such a way that it directly precedes the first data stream and a second part of the second data stream in such a way that it directly follows the first data stream for each continuous series of images.

25. An image coding and recording unit comprising:
- first coding means for converting image information into a first data stream in which each of the series of succeeding images is represented, which image information represents a moving image in the form of a series of images which succeed one another in time
- second coding means for converting the image information into a second data stream,
- recording means for recording the first and the second data stream on the same record carrier,
characterised in that,
each image of the series is represented likewise in the second datastream, the average amount of information per image in the first data stream being smaller than in the second data stream.

26. An image coding and recording unit as claimed in Claim 25, characterised in that the image coding and recording unit is adapted to effectuate a recording of reference information on the record carrier, which reference information is indicative of the locations of corresponding images in the first and the second data stream.

27. An image coding and recording unit as claimed in Claim 25, characterised in that the first coding means are of a type in which images of the series are coded by coding differences between the relevant image and another image of the series, the second coding means being of a type in which each image is separately coded independently of the image information of other images of the series.

28. An image coding and recording unit as claimed in Claim 25 or 26, characterised in that the image coding and recording unit further comprises third coding means for converting the series of images into a third data stream in which each image of the series is represented, the average amount of information per image in the third data stream being smaller than in the first data stream, the recording means being adapted to record the third data stream together with the first and the second data stream.

29. An image coding and recording unit as claimed in Claim 28, characterised in that the image coding and recording unit further comprises fourth coding means for converting the series of images into a fourth data stream, each of the images of the series being separately coded independently of the image information in the other images of the series, the average amount of information per image in the fourth data stream being smaller than in the second data stream.

30. An image coding and recording unit as claimed in Claim 29, characterised in that the image coding and recording unit is adapted to effectuate a recording of further reference information on the record carrier, which further reference information is indicative of the locations of corresponding images.

31. An image coding and recording unit as claimed in Claim 28, 29 or 30, characterised in that the image coding and recording unit comprises means for recording on the record carrier an application program intended to be loaded, after being read, into a control unit of a read device for the purpose of controlling the read-out of the third data stream.

32. An image coding and recording unit as claimed in Claim 28 or 29, characterised in that, in order to obtain the third data stream, the third coding means are adapted to code the images in accordance with an image coding defined in the CD-I standard, and the recording means are adapted to record the application program and the third data stream on the record carrier in a format complying with the CD-I standard.

33. An image coding and recording unit as claimed in Claim 32, characterised in that, in order to obtain the fourth data stream, the third coding means are adapted to code the images in accordance with an image coding defined in the CD-I standard, and the recording means are adapted to record the application program and the fourth data stream on the record carrier in a format complying with the CD-I standard.

34. An image coding and recording unit as claimed in any one of the Claims 25 to 33, characterised in that the means for acquiring image information relating to an object to be examined are adapted to supply a continuous series of succeeding images at intervals in which no image information is available, the recording means being adapted to record at least the third and the fourth data stream, which have been derived from a continuous series of images, in a continuous part of the record carrier.

35. An image coding and recording unit as claimed in Claim 34, characterised in that the recording means are adapted to record a first part of the second data stream in such a way that it directly precedes the first data stream and a second part of the second data stream in such a way that it directly follows the first data stream for each continuous series of images.

36. An image information retrieval unit comprising read means for reading a record carrier on which image information has been recorded relating to moving images in the form of a series of images which succeed one another in time, the image information comprising a first and a second data stream comprising coded information for each of the series of succeeding images, the image information retrieval unit further comprising first and second decoding means for recovering images from the first and the second data stream, image output means for supplying a recovered image to an image reproducing device,
characterised in that,
the first and the second data stream comprising a coded image for each of a series of succeeding images, the first decoding means serve for recovering successive images from the first data stream and the second decoding means serve for recovering individual images from the second data stream, the image information retrieval unit further comprising control means for controlling the read means, the first and the second decoding means and the image output means, which control means are adapted to achieve that in a first mode a part of the recorded first data stream is read, a series of images corresponding to the read-out part is recovered by the first decoding means and said recovered images are supplied by the image output means, and the control means are further adapted to achieve that in a second mode a selected separately coded image of the second data stream is read, an image corresponding thereto is recovered from said coded image by the second decoding means and said recovered image is supplied by the image output means, the unit of the further comprising means for stopping the first mode in response to a "still image" signal and means for starting the second mode, after termination of the first mode, regardless of whether the image which directly precedes the termination of the first mode has been recovered.

37. An image information retrieval unit as claimed in Claim 36, characterised in that the image information retrieval unit comprises means for interrupting the supply of succeeding images recovered from the first data stream, means for determining on the basis of the reference information the location in the second data stream where a separately coded image has been recorded, which image is dictated by the image supplied by the output means at the time of the interruption of the supply of images recovered from the first data stream, the control means for controlling the read-out being adapted to effectuate reading of the separately coded image at the location thus determined from the recorded second data stream at the location thus determined, and the recovery and the supply of the image corresponding to the image thus read.

## Patentansprüche

1. Verfahren der Aufzeichnung von Bildinformation, die sich auf Bewegtbilder bezieht, in codierter Form auf einem Aufzeichnungsträger zur weiteren Analyse zu einem späteren Zeitpunkt, wobei die Bildinformation Bewegtbilder in Form einer Folge von Bildern repräsentiert, die einander zeitlich folgen, wobei die genannte Folge von Bildern in einen ersten Datenstrom umgewandelt wird, in dem jedes Bild aus der Folge aufeinanderfolgender Bilder repräsentiert wird, wobei der erste Datenstrom anschließend auf dem Aufzeichnungsträger aufgezeichnet wird, wobei die Folge von Bildern in einen zweiten Datenstrom umgewandelt wird und der zweite Datenstrom auf dem Aufzeichnungsträger zusammen mit dem ersten Datenstrom aufgezeichnet wird, dadurch gekennzeichnet, daß
jedes Bild aus der Folge von aufeinanderfolgenden Bildern gleichermaßen in dem zweiten Datenstrom repräsentiert wird und daß die mittlere Informationsmenge pro Bild in dem ersten Datenstrom kleiner ist als in dem zweiten Datenstrom.

2. Verfahren nach Anspruch 1, dadurch gekennzeichnet, daß auf dem Aufzeichnungsträger Verweisinformation aufgezeichnet wird, die eine Anzeige für die Orte ist, an denen entsprechende Bilder in dem ersten und dem zweiten Datenstrom liegen.

3. Verfahren nach Anspruch 1, dadurch gekennzeichnet, daß die Umwandlung der Folge von Bildern in dem ersten Datenstrom von einer Art ist, bei der Bilder der Folge mittels Codierungsdifferenzen zwischen dem betreffenden Bild und einem anderen Bild der Folge codiert werden, wobei jedes Bild in dem zweiten Datenstrom durch ein gesondert codiertes Bild repräsentiert wird, das unabhängig von der Bildinformation anderer Bilder der Folge codiert worden ist.

4. Verfahren nach Anspruch 1 oder 3, dadurch gekennzeichnet, daß die Folge von Bildern auch in einen dritten Datenstrom umgewandelt wird, in dem jedes Bild der Folge repräsentiert wird, wobei die mittlere Informationsmenge pro Bild in dem dritten Datenstrom kleiner ist als in dem ersten Datenstrom.

5. Verfahren nach Anspruch 4, dadurch gekennzeichnet, daß die Folge von Bildern auch in einen vierten Datenstrom umgewandelt wird, wobei jedes Bild unabhängig vom Bildinhalt der anderen Bilder der Folge gesondert codiert wird, wobei die mittlere Informationsmenge pro Bild in dem vierten Datenstrom kleiner ist in dem zweiten Datenstrom und der vierte Datenstrom auf dem Aufzeichnungsträger zusammen mit dem ersten, dem zweiten und dem dritten Datenstrom aufgezeichnet wird.

6. Verfahren nach Anspruch 4 oder 5, dadurch gekennzeichnet, daß weitere Verweisinformation auf dem Aufzeichnungsträger aufgezeichnet wird, welche weitere Verweisinformation für jedes Bild der Folge die Teile in dem dritten und/oder vierten Datenstrom angibt, die für das betreffende Bild repräsentativ sind.

7. Verfahren nach Anspruch 4, 5 oder 6, dadurch gekennzeichnet, daß auf dem Aufzeichnungsträger ein Anwendungsprogramm aufgezeichnet wird, das dazu bestimmt ist, nach dem Auslesen in einen Speicher einer Steuereinheit einer Leseeinrichtung geladen zu werden, um anschließend zum Steuern des Auslesens des dritten und/oder vierten Datenstroms verwendet zu werden, wobei das Anwendungsprogramm derart ist, daß es verhindert, daß auf den ersten und/oder den zweiten, auf dem Aufzeichnungsträger aufgezeichneten Datenstrom während der Ausführung des Programms zugegriffen wird.

8. Verfahren nach Anspruch 7, dadurch gekennzeichnet, daß der dritte Datenstrom gemäß einer im CD-I-Standard definierten Bildcodierung erhalten wird und das Anwendungsprogramm und der dritte Datenstrom auf dem Aufzeichnungsträger in einem dem CD-I-Standard genügenden Format aufgezeichnet werden.

9. Verfahren nach Anspruch 7 oder 8, dadurch gekennzeichnet, daß der vierte Datenstrom gemäß einer im CD-I-Standard definierten Bildcodierung erhalten wird und der vierte Datenstrom auf dem Aufzeichnungsträger in einem dem CD-I-Standard genügenden Format aufgezeichnet wird.

10. Verfahren nach einem der vorhergehenden Ansprüche, dadurch gekennzeichnet, daß zumindest der erste und der zweite Datenstrom, die aus einer kontinuierlichen Folge von Bildern abgeleitet worden sind, in einem kontinuierlichen Teil des Aufzeichnungsträgers aufgezeichnet werden.

11. Verfahren nach Anspruch 10, dadurch gekennzeichnet, daß für jede kontinuierliche Folge von Bildern ein erster Teil des zweiten Datenstroms so aufgezeichnet wird, daß er dem ersten Datenstrom direkt vorangeht und ein zweiter Teil des zweiten Datenstroms so aufgezeichnet wird, daß er dem ersten Datenstrom direkt folgt.

12. System mit
- Mitteln zum Erfassen von Bildinformation, die sich auf ein zu untersuchendes Objekt bezieht, wobei die Bildinformation sich auf Bewegtbilder bezieht und eine Folge von Bildern umfaßt, die einander zeitlich folgen,
- einer Bildcodierungs- und Aufzeichnungseinheit mit ersten Codierungsmitteln zum Umwandeln der Folge von einander zeitlich folgenden Bildern in einen ersten Datenstrom sowie zweiten Codierungsmitteln zum Umwandeln der Bildinformation in einen zweiten Datenstrom, und wobei die Bildcodierungs- und Aufzeichnungseinheit weiterhin eine Aufzeichnungseinrichtung zum Aufzeichnen des ersten und des zweiten Datenstroms auf ein und demselben Aufzeichnungsträger umfaßt,
- einer Bildinformationsrückgewinnungseinheit einer ersten Art mit Auslesemitteln zum Auslesen des Aufzeichnungsträgers mit einer ersten Auslesegeschwindigkeit, ersten und zweiten Decodierungsmitteln zum Rückgewinnen aufeinanderfolgender Bilder aus dem ersten und dem zweiten Datenstrom und Bildausgabemitteln, um rückgewonnene Bilder einer Bildwiedergabeeinrichtung zuzuführen,
dadurch gekennzeichnet, daß
jedes Bild aus der Folge von Bildern sowohl in dem ersten Datenstrom als auch in dem zweiten Datenstrom repräsentiert wird und daß die mittlere Informationsmenge pro Bild in dem ersten Datenstrom kleiner ist als in dem zweiten Datenstrom, wobei die ersten Decodierungsmittel zum Rückgewinnen aufeinanderfolgender Bilder aus dem ersten Datenstrom dienen und die zweiten Decodierungsmittel zum Rückgewinnen individueller Bilder aus dem zweiten Datenstrom, wobei das System ein Diagnosesystem ist, das weiterhin Steuerungsmittel umfaßt zum Steuern der Auslesemittel, der ersten und der zweiten Decodierungsmittel und der Bildausgabemittel, wobei die Steuerungsmittel ausgebildet sind, um zu erreichen, daß in einer ersten Betriebsart ein Teil des aufgezeichneten ersten Datenstroms ausgelesen wird, wobei eine Folge von dem ausgelesenen Teil entsprechenden Bildern von den ersten Decodierungsmitteln rückgewonnen wird und die genannten rückgewonnenen Bilder von den Bildausgabemitteln geliefert werden, und die Steuerungsmittel weiterhin ausgebildet sind, um zu erreichen, daß in einer zweiten Betriebsart ein selektiertes gesondert codiertes Bild des zweiten Datenstroms ausgelesen wird, ein diesem entsprechendes Bild von den zweiten Decodierungsmitteln aus dem genannten codierten Bild rückgewonnen wird und das genannte rückgewonnene Bild von den Bildausgabemitteln geliefert wird.

13. System nach Anspruch 12, dadurch gekennzeichnet, daß die Bildinformationsrückgewinnungseinheit der ersten Art Mittel umfaßt zum Stoppen der ersten Betriebsart in Reaktion auf ein "Stehbild"-Signal und Mittel zum Starten der zweiten Betriebsart, nach Beendigung der ersten Betriebsart, unabhängig davon, ob das Bild, das direkt der Beendigung der ersten Betriebsart vorangeht, rückgewonnen worden ist.

14. System nach Anspruch 12 oder 13, dadurch gekennzeichnet, daß die Bildcodierungs- und Aufzeichnungseinheit ausgebildet ist, um eine Aufzeichnung von Verweisinformation auf dem Aufzeichnungsträger zu bewirken, welche Verweisinformation eine Anzeige für die Orte der entsprechenden Bilder in dem ersten und dem zweiten Datenstrom ist.

15. System nach Anspruch 12 oder 13, dadurch gekennzeichnet, daß die Bildinformationsrückgewinnungseinheit Mittel zum Unterbrechen der Lieferung aufeinanderfolgender, aus dem ersten Datenstrom rückgewonnener Bilder umfaßt, Mittel, um auf Basis der Verweisinformation den Ort in dem zweiten Datenstrom zu bestimmen, wo ein gesondert codiertes Bild aufgezeichnet worden ist, welches Bild durch das von den Ausgabemitteln zum Zeitpunkt der Unterbrechung der Lieferung von aus dem ersten Datenstrom rückgewonnenen Bildern gelieferte Bild festgelegt worden ist, wobei die Steuerungsmittel zum Steuern des Auslesens ausgebildet sind, um Auslesen des gesondert codierten Bildes am somit bestimmten Ort aus dem aufgezeichneten zweiten Datenstrom am somit bestimmten Ort und die Rückgewinnung und die Lieferung des dem somit ausgelesenen Bild entsprechenden Bildes zu bewirken.

16. System nach Anspruch 12, 13, 14 oder 15, dadurch gekennzeichnet, daß die ersten Codierungsmittel von einer Art sind, bei der Bilder der Folge mittels Codierungsdifferenzen zwischen dem betreffenden Bild und einem anderen Bild der Folge codiert werden, wobei die zweiten Codierungsmittel ausgebildet sind, um jedes Bild der Folge gesondert zu codieren, unabhängig vom Bildinhalt anderer Bilder der Folge.

17. System nach Anspruch 12 oder 16, dadurch gekennzeichnet, daß die Bildcodierungs- und Aufzeichnungseinheit weiterhin dritte Codierungsmittel umfaßt zum Umwandeln der Folge von Bildern in einen dritten Datenstrom, in dem jedes Bild der Folge repräsentiert wird, wobei die mittlere Informationsmenge pro Bild in dem dritten Datenstrom kleiner ist als in dem ersten Datenstrom, wobei die Aufzeichnungsmittel ausgebildet sind, den dritten Datenstrom zusammen mit dem ersten und dem zweiten Datenstrom aufzuzeichnen, und das System weiterhin eine Bildinformationsrückgewinnungseinheit einer zweiten Art umfaßt mit zweiten Auslesemitteln zum Auslesen des Aufzeichnungsträgers mit einer zweiten Auslesegeschwindigkeit sowie Mittel zum Rückgewinnen der Bilder aus dem dritten somit ausgelesenen Datenstrom, wobei die erste Auslesegeschwindigkeit höher ist als die zweite Auslesegeschwindigkeit.

18. System nach Anspruch 17, dadurch gekennzeichnet, daß die Bildcodierungs- und Aufzeichnungseinheit weiterhin vierte Codierungsmittel umfaßt zum Umwandeln aller Bilder der Folge in einen vierten Datenstrom, wobei jedes Bild der Folge unabhängig von der Bildinformation in Bildern des Restes der Folge codiert wird, wobei die mittlere Informationsmenge pro Bild in dem vierten Datenstrom kleiner ist als in dem zweiten Datenstrom, wobei die Aufzeichnungsmittel ausgebildet sind, den vierten Datenstrom zusammen mit dem ersten, dem zweiten und dem dritten Datenstrom aufzuzeichnen, und die Bildinformationsrückgewinnungseinheit von der zweiten Art ist, mit Mitteln zum Rückgewinnen der Bilder aus dem ausgelesenen vierten Datenstrom.

19. System nach Anspruch 18, dadurch gekennzeichnet, daß die Bildcodierungs- und Aufzeichnungseinheit ausgebildet ist, um eine Aufzeichnung weiterer Verweisinformation auf dem Aufzeichnungsträger zu bewirken, welche weitere Verweisinformation eine Anzeige für die Orte entsprechender Bilder in dem ersten und dem zweiten Datenstrom ist.

20. System nach Anspruch 17 oder 18, dadurch gekennzeichnet, daß die Bildcodierungs- und Aufzeichnungseinheit Mittel umfaßt zum Aufzeichnen eines Anwendungsprogramms auf dem Aufzeichnungsträger, das dazu bestimmt ist, nach dem Auslesen in eine Steuereinheit einer Leseeinrichtung zum Zweck des Steuerns des Auslesens des dritten Datenstroms geladen zu werden, wobei die Bildinformationsrückgewinnungseinheit von der zweiten Art ist, mit Auslesemitteln zum Lesen des Anwendungsprogramms und anschließenden Laden des Anwendungsprogramms in eine Steuereinheit zum Steuern des Auslesens des dritten Datenstrom, wobei das Anwendungsprogramm derart ist, daß es verhindert, daß auf den ersten und/oder den zweiten, auf dem Aufzeichnungsträger aufgezeichneten Datenstrom während der Ausführung des Programms zugegriffen wird.

21. System nach Anspruch 17 oder 18, dadurch gekennzeichnet, daß, um den dritten Datenstrom zu erhalten, die dritten Codierungsmittel ausgebildet sind, um die Bilder gemäß einer im CD-I-Standard definierten Bildcodierung zu codieren, und die Aufzeichnungsmittel ausgebildet sind, um das Anwendungsprogramm und den dritten Datenstrom auf dem Aufzeichnungsträger in einem dem CD-I-Standard genügenden Format aufzuzeichnen, wobei die Bildinformationsrückgewinnungseinheit der zweiten Art ein CD-I-Spieler ist.

22. System nach Anspruch 21, dadurch gekennzeichnet, daß, um den vierten Datenstrom zu erhalten, die dritten Codierungsmittel ausgebildet sind, um die Bilder gemäß einer im CD-I-Standard definierten Bildcodierung zu codieren, und die Aufzeichnungsmittel ausgebildet sind, um das Anwendungsprogramm und den vierten Datenstrom auf dem Aufzeichnungsträger in einem dem CD-I-Standard genügenden Format aufzuzeichnen.

23. System nach einem der Ansprüche 13 bis 21, bei dem die Mittel zum Erfassen von Bildinformation, die sich auf ein zu untersuchendes Objekt bezieht, ausgebildet sind, um eine kontinuierliche Folge aufeinanderfolgender Bilder bei Intervallen zu liefern, in denen keine Bildinformation zur Verfügung steht, wobei die Aufzeichnungsmittel ausgebildet sind, um zumindest den ersten und den zweiten Datenstrom, die aus einer kontinuierlichen Folge von Bildern abgeleitet worden sind, in einem kontinuierlichen Teil des Aufzeichnungsträgers aufzuzeichnen.

24. System nach Anspruch 18, dadurch gekennzeichnet, daß die Aufzeichnungsmittel ausgebildet sind, um für jede kontinuierliche Folge von Bildern einen ersten Teil des zweiten Datenstroms so aufzuzeichnen, daß er dem ersten Datenstrom direkt vorangeht und einen zweiten Teil des zweiten Datenstroms so aufzuzeichnen, daß er dem ersten Datenstrom direkt folgt.

25. Bildcodierungs- und Aufzeichnungseinheit mit:
- ersten Codierungsmitteln zum Umwandeln von Bildinformationen in einen ersten Datenstrom, in dem jedes Bild aus der Folge aufeinanderfolgender Bilder repräsentiert wird, wobei die Bildinformation ein Bewegtbild in Form einer Folge von Bildern repräsentiert, die einander zeitlich folgen,
- zweiten Codierungsmitteln zum Umwandeln der Bildinformation in einen zweiten Datenstrom,
- Aufzeichnungsmitteln zum Aufzeichnen des ersten und des zweiten Datenstroms auf dem gleichen Aufzeichnungsträger,
dadurch gekennzeichnet, daß
jedes Bild aus der Folge gleichermaßen in dem zweiten Datenstrom repräsentiert wird, wobei die mittlere Informationsmenge pro Bild in dem ersten Datenstrom kleiner ist als in dem zweiten Datenstrom.

26. Bildcodierungs- und Aufzeichnungseinheit nach Anspruch 25, dadurch gekennzeichnet, daß die Bildcodierungs- und Aufzeichnungseinheit ausgebildet ist, um eine Aufzeichnung von Verweisinformation auf dem Aufzeichnungsträger zu bewirken, welche Verweisinformation eine Anzeige für die Orte entsprechender Bilder in dem ersten und dem zweiten Datenstrom ist.

27. Bildcodierungs- und Aufzeichnungseinheit nach Anspruch 25, dadurch gekennzeichnet, daß die ersten Codierungsmittel von einer Art sind, bei der Bilder der Folge mittels Codierungsdifferenzen zwischen dem betreffenden Bild und einem anderen Bild der Folge codiert werden, wobei die zweiten Codierungsmittel von einer Art sind, bei der jedes Bild gesondert codiert wird, unabhängig von der Bildinformation anderer Bilder der Folge.

28. Bildcodierungs- und Aufzeichnungseinheit nach Anspruch 25 oder 26, dadurch gekennzeichnet, daß die Bildcodierungs- und Aufzeichnungseinheit weiterhin dritte Codierungsmittel umfaßt zum Umwandeln der Folge von Bildern in einen dritten Datenstrom, in dem jedes Bild der Folge repräsentiert wird, wobei die mittlere Informationsmenge pro Bild in dem dritten Datenstrom kleiner ist als in dem ersten Datenstrom, wobei die Aufzeichnungsmittel ausgebildet sind, um den dritten Datenstrom zusammen mit dem ersten und dem zweiten Datenstrom aufzuzeichnen.

29. Bildcodierungs- und Aufzeichnungseinheit nach Anspruch 28, dadurch gekennzeichnet, daß die Bildcodierungs- und Aufzeichnungseinheit weiterhin vierte Codierungsmittel umfaßt zum Umwandeln der Folge von Bildern in einen vierten Datenstrom, wobei jedes der Bilder der Folge unabhängig von der Bildinformation der anderen Bilder der Folge gesondert codiert wird, wobei die Informationsmenge pro Bild in dem vierten Datenstrom kleiner ist in dem zweiten Datenstrom.

30. Bildcodierungs- und Aufzeichnungseinheit nach Anspruch 29, dadurch gekennzeichnet, daß die Bildcodierungs- und Aufzeichnungseinheit ausgebildet ist, um eine Aufzeichnung von Verweisinformation auf dem Aufzeichnungsträger zu bewirken, welche weitere Verweisinformation eine Anzeige für die Orte entsprechender Bilder ist.

31. Bildcodierungs- und Aufzeichnungseinheit nach Anspruch 28, 29 oder 30, dadurch gekennzeichnet, daß die Bildcodierungs- und Aufzeichnungseinheit Mittel umfaßt zum Aufzeichnen eines Anwendungsprogramms auf dem Aufzeichnungsträger, das dazu bestimmt ist, nach dem Auslesen in eine Steuereinheit einer Leseeinrichtung zum Steuern des Auslesens des dritten Datenstroms geladen zu werden.

32. Bildcodierungs- und Aufzeichnungseinheit nach Anspruch 28 oder 29, dadurch gekennzeichnet, daß, um den dritten Datenstrom zu erhalten, die dritten Codierungsmittel ausgebildet sind, um die Bilder gemäß einer im CD-I-Standard definierten Bildcodierung zu codieren und die Aufzeichnungsmittel ausgebildet sind, um das Anwendungsprogramm und den dritten Datenstrom auf dem Aufzeichnungsträger in einem dem CD-I-Standard genügenden Format aufzuzeichnen.

33. Bildcodierungs- und Aufzeichnungseinheit nach Anspruch 32, dadurch gekennzeichnet, daß, um den vierten Datenstrom zu erhalten, die dritten Codierungsmittel ausgebildet sind, um die Bilder gemäß einer im CD-I-Standard definierten Bildcodierung zu codieren, und die Aufzeichnungsmittel ausgebildet sind, um das Anwendungsprogramm und den vierten Datenstrom auf dem Aufzeichnungsträger in einem dem CD-I-Standard genügenden Format aufzuzeichnen.

34. Bildcodierungs- und Aufzeichnungseinheit nach einem der Ansprüche 25 bis 33, dadurch gekennzeichnet, daß die Mittel zum Erfassen von Bildinformation, die sich auf ein zu untersuchendes Objekt bezieht, ausgebildet sind, eine kontinuierliche Folge aufeinanderfolgender Bilder bei Intervallen zu liefern, in denen keine Bildinformation zur Verfügung steht, wobei die Aufzeichnungsmittel ausgebildet sind, um zumindest den dritten und den vierten Datenstrom, die aus einer kontinuierlichen Folge von Bildern abgeleitet worden sind, in einem kontinuierlichen Teil des Aufzeichnungsträgers aufzuzeichnen.

35. Bildcodierungs- und Aufzeichnungseinheit nach Anspruch 34, dadurch gekennzeichnet, daß die Aufzeichnungsmittel ausgebildet sind, um für jede kontinuierliche Folge von Bildern einen ersten Teil des zweiten Datenstroms so aufzuzeichnen, daß er dem ersten Datenstrom direkt vorangeht und einen zweiten Teil des zweiten Datenstroms so aufzuzeichnen, daß er dem ersten Datenstrom direkt folgt.

36. Bildinformationsrückgewinnungseinheit mit Auslesemitteln zum Auslesen eines Aufzeichnungsträgers, auf dem Bildinformation, die sich auf Bewegtbilder bezieht, in Form einer Folge von einander zeitlich folgenden Bildern aufgezeichnet worden ist, wobei die Bildinformation einen ersten und einen zweiten Datenstrom mit codierter Information für jedes Bild aus der Folge von aufeinanderfolgenden Bildern umfaßt, wobei die Bildinformationsrückgewinnungseinheit weiterhin erste und zweite Decodierungsmittel umfaßt zum Rückgewinnen von Bildern aus dem ersten und dem zweiten Datenstrom, Bildausgabemittel zum Liefern eines rückgewonnenen Bildes an eine Bildwiedergabeeinrichtung, dadurch gekennzeichnet, daß
wenn der erste Datenstrom und der zweite Datenstrom ein codiertes Bild für jedes Bild aus einer Folge von aufeinanderfolgende Bildern umfassen, die ersten Decodierungsmittel zum Rückgewinnen aufeinanderfolgender Bilder aus dem ersten Datenstrom dienen und die zweiten Decodierungsmittel zum Rückgewinnen individueller Bilder aus dem zweiten Datenstrom, wobei die Bildinformationsrückgewinnungseinheit weiterhin Steuerungsmittel zum Steuern der Auslesemittel, der ersten und der zweiten Decodierungsmittel und der Bildausgabemittel umfaßt, wobei die Steuerungsmittel ausgebildet sind, um zu erreichen, daß in einer ersten Betriebsart ein Teil des aufgezeichneten ersten Datenstroms ausgelesen wird, wobei eine Folge von dem ausgelesenen Teil entsprechenden Bildern von den ersten Decodierungsmitteln rückgewonnen wird und die genannten rückgewonnenen Bilder von den Bildausgabemitteln geliefert werden, und die Steuerungsmittel weiterhin ausgebildet sind, um zu erreichen, daß in einer zweiten Betriebsart ein selektiertes gesondert codiertes Bild des zweiten Datenstroms ausgelesen wird, ein diesem entsprechendes Bild von den zweiten Decodierungsmitteln aus dem genannten codierten Bild rückgewonnen wird und das genannte rückgewonnene Bild von den Bildausgabemitteln geliefert wird, wobei die Einheit weiterhin Mittel umfaßt zum Stoppen der ersten Betriebsart in Reaktion auf ein "Stehbild"-Signal und Mittel zum Starten der zweiten Betriebsart, nach Beendigung der ersten Betriebsart, unabhängig davon, ob das Bild, das direkt der Beendigung der ersten Betriebsart vorangeht, rückgewonnen worden ist.

37. Bildinformationsrückgewinnungseinheit nach Anspruch 36, dadurch gekennzeichnet, daß die Bildinformationsrückgewinnungseinheit Mittel zum Unterbrechen der Lieferung aufeinanderfolgender, aus dem ersten Datenstrom rückgewonnener Bilder umfaßt, Mittel, um auf Basis der Verweisinformation den Ort in dem zweiten Datenstrom zu bestimmen, wo ein gesondert codiertes Bild aufgezeichnet worden ist, welches Bild durch das von den Ausgabemitteln zum Zeitpunkt der Unterbrechung der Lieferung von aus dem ersten Datenstrom rückgewonnenen Bildern gelieferte Bild festgelegt worden ist, wobei die Steuerungsmittel zum Steuern des Auslesens ausgebildet sind, um Auslesen des gesondert codierten Bildes am somit bestimmten Ort aus dem aufgezeichneten zweiten Datenstrom am somit bestimmten Ort und die Rückgewinnung und die Lieferung des dem somit ausgelesenen Bild entsprechenden Bildes zu bewirken.

## Revendications

1. Procédé d'enregistrement sous forme codée sur un support d'enregistrement d'informations d'image se rapportant à des images mobiles en vue d'une analyse plus approfondie à un moment ultérieur, les informations d'image représentant des images mobiles sous la forme d'une série d'images qui se succèdent dans le temps, ladite série d'images étant convertie en un premier flux de données dans lequel chacune des séries d'images successives est représentée, lequel premier flux de données est ensuite enregistré sur le support d'enregistrement, la série d'images étant convertie en un deuxième flux de données, et le deuxième flux de données étant enregistré sur le support d'enregistrement avec le premier flux de données,
caractérisé en ce que
chacune des séries d'images successives est aussi représentée dans le deuxième flux de données, et en ce que la quantité moyenne d'informations par image dans le premier flux de données est inférieure à celle dans le deuxième flux de données.

2. Procédé suivant la revendication 1, caractérisé en ce que des informations de référence sont enregistrées sur le support d'enregistrement, lesquelles informations de référence indiquent les emplacements dans lesquels des images correspondantes se trouvent dans le premier et le deuxième flux de données.

3. Procédé suivant la revendication 1, caractérisé en ce que la conversion de la série d'images dans le premier flux de données est d'un type dans lequel les images de la série sont codées par des différences de codage entre l'image concernée et une autre image de la série, chaque image dans le deuxième flux de données étant représentée par une image codée séparément qui a été codée indépendamment des informations d'image d'autres images de la série.

4. Procédé suivant la revendication 1 ou 3, caractérisé en ce que la série d'images est également convertie en un troisième flux de données dans lequel chaque image de la série est représentée, la quantité moyenne d'informations par image dans le troisième flux de données étant inférieure à celle dans le premier flux de données.

5. Procédé suivant la revendication 4, caractérisé en ce que la série d'images est également convertie en un quatrième flux de données, chaque image étant codée séparément, indépendamment du contenu d'image des autres images de la série, la quantité moyenne d'informations par image dans le quatrième flux de données étant inférieure à celle dans le deuxième flux de données, et le quatrième flux de données étant enregistré sur le support d'enregistrement avec le premier, le deuxième et le troisième flux de données.

6. Procédé suivant la revendication 4 ou 5, caractérisé en ce que d'autres informations de référence sont enregistrées sur le support d'enregistrement, lesquelles autres informations de référence pour chaque image de la série indiquent les parties dans le troisième et/ou le quatrième flux de données qui sont représentatives de l'image concernée.

7. Procédé suivant la revendication 4, 5 ou 6, caractérisé en ce que, sur le support d'enregistrement, est enregistré un programme d'application qui, après avoir été lu, est prévu pour être chargé dans une mémoire d'une unité de commande d'un dispositif de lecture afin d'être utilisé par la suite pour commander la lecture du troisième et/ou du quatrième flux de données, le programme d'application étant d'un type qui empêche l'accès au premier et/ou au deuxième flux de données enregistrés sur le support d'enregistrement pendant l'exécution du programme.

8. Procédé suivant la revendication 7, caractérisé en ce que le troisième flux de données est obtenu suivant un codage d'images défini dans la norme CD-I, et le programme d'application et le troisième flux de données sont enregistrés sur le support d'enregistrement dans un format conforme à la norme CD-I.

9. Procédé suivant la revendication 7 ou 8, caractérisé en ce que le quatrième flux de données est obtenu suivant un codage d'images défini dans la norme CD-I, et le quatrième flux de données est enregistré sur le support d'enregistrement en un format conforme à la norme CD-I.

10. Procédé suivant l'une quelconque des revendications précédentes, caractérisé en ce qu'au moins le premier et le deuxième flux de données, qui ont été dérivés d'une série continue d'images, sont enregistrés dans une partie continue du support d'enregistrement.

11. Procédé suivant la revendication 10, caractérisé en ce que, pour chaque série continue d'images, une première partie du deuxième flux de données est enregistrée de telle manière qu'elle précède directement le premier flux de données et une deuxième partie du deuxième flux de données est enregistrée de telle manière qu'elle suit directement le premier flux de données.

12. Système comprenant
- des moyens pour acquérir des informations d'image concernant un objet à examiner, lesquelles informations d'image se rapportent à des images mobiles et comprennent une série d'images qui se succèdent dans le temps,
- une unité de codage et d'enregistrement d'images comprenant des premiers moyens de codage pour convertir les séries d'images qui se succèdent dans le temps en un premier flux de données, et des deuxièmes moyens de codage pour convertir les informations d'image en un deuxième flux de données, l'unité de codage et d'enregistrement d'images comprenant en outre un dispositif d'enregistrement pour enregistrer le premier et le deuxième flux de données sur un seul et même support d'enregistrement,
- une unité d'extraction d'informations d'image d'un premier type comprenant des moyens de lecture pour lire le support d'enregistrement à une première vitesse de lecture, des premiers et deuxièmes moyens de décodage pour récupérer des images successives du premier et du deuxième flux de données, et des moyens de sortie d'images pour fournir des images récupérées à un dispositif de reproduction d'images,
caractérisé en ce que
chaque image de la série d'images est représentée à la fois dans le premier flux de données et dans le deuxième flux de données, en ce que la quantité moyenne d'informations par image dans le premier flux de données est inférieure à celle dans le deuxième flux de données, dans lequel les premiers moyens de décodage servent à récupérer des images successives depuis le premier flux de données, et les deuxièmes moyens de décodage servent à récupérer des images individuelles depuis le deuxième flux de données, le système étant un système de diagnostic qui comprend en outre des moyens de commande pour commander les moyens de lecture, les premiers et les deuxièmes moyens de décodage et les moyens de sortie d'image, lesquels moyens de commande sont adaptés pour parvenir à ce que, dans un premier mode, une partie du premier flux de données enregistré soit lue, une série d'images correspondant à la partie lue soit récupérée par les premiers moyens de décodage et lesdites images récupérées soient fournies par les moyens de sortie d'images, et les moyens de commande sont en outre adaptés pour parvenir à ce que, dans un deuxième mode, une image codée séparément sélectionnée du deuxième flux de données soit lue, une image correspondant à celle-ci soit récupérée de ladite image codée par les deuxièmes moyens de décodage et ladite image récupérée soit fournie par les moyens de sortie d'images.

13. Système suivant la revendication 12, caractérisé en ce que l'unité d'extraction d'informations d'image du premier type comprend des moyens pour arrêter le premier mode en réaction à un signal "d'image fixe" et des moyens pour lancer le deuxième mode, au terme du premier mode, que l'image qui précède directement la fin du premier mode ait été récupérée ou non.

14. Système suivant la revendication 12 ou 13, caractérisé en ce que l'unité de codage et d'enregistrement d'images est adaptée pour effectuer un enregistrement d'informations de référence sur le support d'enregistrement, lesquelles informations de référence indiquent les emplacements des images correspondantes dans le premier et le deuxième flux de données.

15. Système suivant la revendication 12 ou 13, caractérisé en ce que l'unité d'extraction d'informations d'image comprend des moyens pour interrompre la fourniture d'images successives récupérées depuis le premier flux de données, des moyens pour déterminer, sur la base des informations de référence, l'emplacement dans le deuxième flux de données où une image codée séparément a été enregistrée, laquelle image est dictée par l'image fournie par les moyens de sortie au moment de l'interruption de la fourniture d'images récupérées depuis le premier flux de données, les moyens de commande pour commander la lecture étant adaptés pour effectuer la lecture de l'image codée séparément à l'emplacement ainsi déterminé à partir du deuxième flux de données enregistré à l'emplacement ainsi déterminé, et la récupération et la fourniture de l'image correspondant à l'image ainsi lue.

16. Système suivant la revendication 12, 13, 14 ou 15, caractérisé en ce que les premiers moyens de codage sont d'un type dans lequel les images de la série sont codées par des différences de codage entre l'image concernée et une autre image de la série, les deuxièmes moyens de codage étant adaptés pour coder séparément chaque image de la série indépendamment du contenu d'image des autres images de la série.

17. Système suivant la revendication 12 ou 16, caractérisé en ce que l'unité de codage et d'enregistrement d'images comprend en outre des troisièmes moyens de codage pour convertir la série d'images en un troisième flux de données dans lequel chaque image de la série est représentée, la quantité moyenne d'informations par image dans le troisième flux de données étant inférieure à celle dans le premier flux de données, les moyens d'enregistrement étant adaptés pour enregistrer le troisième flux de données avec le premier et le deuxième flux de données, et le système comprenant en outre une unité d'extraction d'informations d'image d'un deuxième type comprenant des deuxièmes moyens de lecture pour lire le support d'enregistrement à une deuxième vitesse de lecture, et des moyens pour récupérer les images depuis le troisième flux de données ainsi lu, la première vitesse de lecture étant supérieure à la deuxième vitesse de lecture.

18. Système suivant la revendication 17, caractérisé en ce que l'unité de codage et d'enregistrement d'images comprend en outre des quatrièmes moyens de codage pour convertir l'ensemble des images de la série en un quatrième flux de données, chaque image de la série étant codée indépendamment des informations d'images en images du reste de la série, la quantité moyenne d'informations par image dans le quatrième flux de données étant inférieure à celle dans le deuxième flux de données, les moyens d'enregistrement étant adaptés pour enregistrer le quatrième flux de données avec le premier, le deuxième et le troisième flux de données, et l'unité d'extraction d'informations d'image étant du deuxième type comprenant des moyens pour récupérer les images depuis le quatrième flux de données lu.

19. Système suivant la revendication 18, caractérisé en ce que l'unité de codage et d'enregistrement d'images est adaptée pour effectuer un enregistrement d'autres informations de référence sur le support d'enregistrement, lesquelles autres informations de référence indiquent les emplacements des images correspondantes dans le premier et le deuxième flux de données.

20. Système suivant la revendication 17 ou 18, caractérisé en ce que l'unité de codage et d'enregistrement d'images comprend des moyens pour enregistrer sur le support d'enregistrement un programme d'application conçu pour être chargé, après avoir été lu, dans une unité de commande d'un dispositif de lecture aux fins de commander la lecture du troisième flux de données, l'unité d'extraction d'informations d'image étant du deuxième type comprenant des moyens de lecture pour lire le programme d'application et charger ensuite le programme d'application dans une unité de commande pour commander la lecture du troisième flux de données, le programme d'application étant d'un type qui empêche l'accès au premier et/ou au deuxième flux de données enregistrés sur le support d'enregistrement pendant l'exécution du programme.

21. Système suivant la revendication 17 ou 18, caractérisé en ce que, afin d'obtenir le troisième flux de données, les troisièmes moyens de codage sont adaptés pour coder les images suivant un codage d'images défini dans la norme CD-I, et les moyens d'enregistrement sont adaptés pour enregistrer le programme d'application et le troisième flux de données sur le support d'enregistrement en un format conforme à la norme CD-I, l'unité d'extraction d'informations d'image du deuxième type étant un lecteur CD-I.

22. Système suivant la revendication 21, caractérisé en ce que, afin d'obtenir le quatrième flux de données, les troisièmes moyens de codage sont adaptés pour coder les images suivant un codage d'images défini dans la norme CD-I, et les moyens d'enregistrement sont adaptés pour enregistrer le programme d'application et le quatrième flux de données sur le support d'enregistrement en un format conforme à la norme CD-I.

23. Système suivant l'une quelconque des revendications 13 à 21, dans lequel les moyens pour acquérir des informations d'image se rapportant à un objet à examiner sont adaptés pour fournir une série continue d'images successives à des intervalles dans lesquels aucune information d'images n'est disponible, les moyens d'enregistrement étant adaptés pour enregistrer au moins le premier et le deuxième flux de données, qui ont été dérivés d'une série continue d'images, dans une partie continue du support d'enregistrement.

24. Système suivant la revendication 18, caractérisé en ce que les moyens d'enregistrement sont adaptés pour enregistrer une première partie du deuxième flux de données de telle manière qu'elle précède directement le premier flux de données et une deuxième partie du deuxième flux de données de telle manière qu'elle suit directement le premier flux de données pour chaque série continue d'images.

25. Unité de codage et d'enregistrement d'images comprenant :
- des premiers moyens de codage pour convertir des informations d'image en un premier flux de données dans lequel chacune des séries d'images successives est représentée, lesquelles informations d'image représentent une image mobile sous la forme d'une série d'images qui se succèdent dans le temps
- des deuxièmes moyens de codage pour convertir les informations d'image en un deuxième flux de données,
- des moyens d'enregistrement pour enregistrer le premier et le deuxième flux de données sur le même support d'enregistrement,
caractérisée en ce que
chaque image de la série est représentée aussi dans le deuxième flux de données, la quantité moyenne d'informations par image dans le premier flux de données étant inférieure à celle dans le deuxième flux de données.

26. Unité de codage et d'enregistrement d'images suivant la revendication 25, caractérisée en ce que l'unité de codage et d'enregistrement d'images est adaptée pour effectuer un enregistrement d'informations de référence sur le support d'enregistrement, lesquelles informations de référence indiquent les emplacements des images correspondantes dans le premier et le deuxième flux de données.

27. Unité de codage et d'enregistrement d'images suivant la revendication 25, caractérisée en ce que les premiers moyens de codage sont d'un type dans lequel des images de la série sont codées par des différences de codage entre l'image concernée et une autre image de la série, les deuxièmes moyens de codage étant d'un type dans lequel chaque image est codée séparément indépendamment des informations d'image d'autres images de la série.

28. Unité de codage et d'enregistrement d'images suivant la revendication 25 ou 26, caractérisée en ce que l'unité de codage et d'enregistrement d'images comprend en outre des troisièmes moyens de codage pour convertir la série d'images en un troisième flux de données dans lequel chaque image de la série est représentée, la quantité moyenne d'informations par image dans le troisième flux de données étant inférieure à celle dans le premier flux de données, les moyens d'enregistrement étant adaptés pour enregistrer le troisième flux de données avec le premier et le deuxième flux de données.

29. Unité de codage et d'enregistrement d'images suivant la revendication 28, caractérisée en ce que l'unité de codage et d'enregistrement d'images comprend en outre des quatrièmes moyens de codage pour convertir la série d'images en un quatrième flux de données, chacune des images de la série étant codée séparément indépendamment des informations d'images dans les autres images de la série, la quantité moyenne d'informations par image dans le quatrième flux de données étant inférieure à celle dans le deuxième flux de données.

30. Unité de codage et d'enregistrement d'images suivant la revendication 29, caractérisée en ce que l'unité de codage et d'enregistrement d'images est adaptée pour effectuer un enregistrement d'autres informations de référence sur le support d'enregistrement, lesquelles autres informations de référence indiquent les emplacements des images correspondantes.

31. Unité de codage et d'enregistrement d'images suivant la revendication 28, 29 ou 30, caractérisée en ce que l'unité de codage et d'enregistrement d'images comprend des moyens pour enregistrer sur le support d'enregistrement un programme d'application prévu pour être chargé, après avoir été lu, dans une unité de commande d'un dispositif de lecture aux fins de commander la lecture du troisième flux de données.

32. Unité de codage et d'enregistrement d'images suivant la revendication 28 ou 29, caractérisée en ce que, afin d'obtenir le troisième flux de données, les troisièmes moyens de codage sont adaptés pour coder les images suivant un codage d'images défini dans la norme CD-I, et les moyens d'enregistrement sont adaptés pour enregistrer le programme d'application et le troisième flux de données sur le support d'enregistrement en un format conforme à la norme CD-I.

33. Unité de codage et d'enregistrement d'images suivant la revendication 32, caractérisée en ce que, afin d'obtenir le quatrième flux de données, les troisièmes moyens de codage sont adaptés pour coder les images suivant un codage d'images défini dans la norme CD-I, et les moyens d'enregistrement sont adaptés pour enregistrer le programme d'application et le quatrième flux de données sur le support d'enregistrement en un format conforme à la norme CD-I.

34. Unité de codage et d'enregistrement d'images suivant l'une quelconque des revendications 25 à 33, caractérisée en ce que les moyens pour acquérir des informations d'image se rapportant à un objet à examiner sont adaptés pour fournir une série continue d'images successives à des intervalles dans lesquels aucune information d'image n'est disponible, les moyens d'enregistrement étant adaptés pour enregistrer au moins le troisième et le quatrième flux de données, qui ont été dérivés d'une série continue d'images, dans une partie continue du support d'enregistrement.

35. Unité de codage et d'enregistrement d'images suivant la revendication 34, caractérisée en ce que les moyens d'enregistrement sont adaptés pour enregistrer une première partie du deuxième flux de données de telle manière qu'elle précède directement le premier flux de données et une deuxième partie du deuxième flux de données de telle manière qu'elle suit directement le premier flux de données pour chaque série continue d'images.

36. Unité d'extraction d'informations d'images comprenant des moyens de lecture pour lire un support d'enregistrement sur lequel des informations d'image se rapportant à des images mobiles ont été enregistrées sous la forme d'une série d'images qui se succèdent dans le temps, les informations d'image comprenant un premier et un deuxième flux de données comprenant des informations codées pour chacune des séries d'images successives, l'unité d'extraction d'informations d'image comprenant en outre des premiers et deuxièmes moyens de décodage pour récupérer des images depuis le premier et le deuxième flux de données, des moyens de sortie d'images pour fournir une image récupérée à un dispositif de reproduction d'images,
caractérisée en ce que
le premier et le deuxième flux de données comprenant une image codée pour chacune d'une série d'image successives, les premiers moyens de décodage servent à récupérer des images successives à partir du premier flux de données et les deuxièmes moyens de décodage servent à récupérer des images individuelles à partir du deuxième flux de données, l'unité d'extraction d'informations d'image comprenant en outre des moyens de commande pour commander les moyens de lecture, les premiers et les deuxièmes moyens de décodage et les moyens de sortie d'images, lesquels moyens de commande sont adaptés pour parvenir à ce que, dans un premier mode, une partie du premier flux de données enregistré soit lue, une série d'images correspondant à la partie lue soit récupérée par les premiers moyens de décodage et lesdites images récupérées soient fournies par les moyens de sortie d'images, et les moyens de commande sont en outre adaptés pour parvenir à ce que, dans un deuxième mode, une image codée séparément sélectionnée du deuxième flux de données soit lue, une image correspondant à celle-ci soit récupérée à partir de ladite image codée par les deuxièmes moyens de décodage et ladite image récupérée soit fournie par les moyens de sortie d'images, l'unité comprenant en outre des moyens pour arrêter le premier mode en réponse à un signal "d'image fixe" et des moyens pour lancer le deuxième mode, au terme du premier mode, que l'image qui précède directement la fin du premier mode ait été récupérée ou non.

37. Unité d'extraction d'informations d'image suivant la revendication 36, caractérisée en ce que l'unité d'extraction d'informations d'image comprend des moyens pour interrompre la fourniture d'images successives récupérées depuis le premier flux de données, des moyens pour déterminer, sur la base des informations de référence, l'emplacement dans le deuxième flux de données où une image codée séparément a été enregistrée, laquelle image est dictée par l'image fournie par les moyens de sortie au moment de l'interruption de la fourniture d'images récupérées depuis le premier flux de données, les moyens de commande pour commander la lecture étant adaptés pour effectuer la lecture de l'image codée séparément à l'emplacement ainsi déterminé depuis le deuxième flux de données enregistré à l'emplacement ainsi déterminé, et la récupération et la fourniture de l'image correspondant à l'image ainsi lue.
